# EUROPEAN PATENT APPLICATION

(11) **EP 1 447 182 A1**
(43) Date of publication of application: **18.08.2004**
(21) Application number: 03028037.4
(22) Date of filing: 06.12.2003
(51) Int. Cl.: B25G 1/10, B29C 45/16, B29C 45/36

(54) **Method of manufacturing a handle grip of a tool and its products**

(30) Priority: 15.02.2003 DE 10306424
(71) Applicant: Nieh Chuang Industrial Co., Ltd., Neihu, Tapei, Taiwan (CN)
(72) Inventor: Chen, Chun Yong, Neihu, Taipei Taiwan (CN)
(74) Representative: Meyer, Ludgerus A.

(57) **Abstract**

A method of manufacturing a handle grip of a tool comprises the steps of: 1. to position a mandrel (A) of a manufacturing machine and to inject plastic material to form an inner layer (10); 2. to release the positioning to leave positioning holes (12,13) on the shaped inner layer, the inner layer then is processed by second time injection to completely envelop the inner layer with plastic and shape a middle layer (20); and 3. the middle layer being processed by third time injection to partially envelop the middle layer with plastic to thereby form an external layer (30) with the middle layer partially exposed, and the handle grip of the tool with two colors in firm combining state being completed. On the handle grip made by these steps, the holes formed after taking off the mandrel of the manufacturing machine are holes for combining the stem of the tool; hence the holes made are not subjected to twisting and deformation, and is convenient for combining with the stem. Using this process, a handle grip of the tool with plural colors can be produced.

## Description

### BACKGROUND OF THE INVENTION

### 1. Field of the invention

The present invention is related to a method of manufacturing a handle grip of a tool and its products, the method is simple in manufacturing and the products each is firm in combining and apparently beautiful, and especially to such a method suitable for application to hand tools such as trowels, scrapers or the like.

### 2. Description of the Prior Art

Distribution of hand tools is quite broad, they are generally used for specific works; and normally, some are prepared in houses, such as hammers, tree scissors etc., to be used timelessly. Taking the most traditional hand tool- a hammer - as an example, it is provided with a groove on the hammerhead for inserting therein a stem, thus assembling of the hammer is completed. A user just hold the stem, and he can apply a force thereto in use. Such a hammer is structurally simple, it can get the object of hammering an article, it does not have a good appearance though, and more, feeling of touch of a user is bad when in holding it.

Conventional hand tools do not meet the requirement of esthetic beauty and coziness for people nowadays; thereby, they have been added with sleeves on the ends of stems, and hand tools convenient for griping have been developed. Such sleeves are made of plastic or rubber, they can increase coziness in holding tools; however, plastic and rubber are monochromatic materials, they are unable to be manufactured to get twin-color sleeves with esthetic beauty, and unable to give hand tools marvelous appearances.

In the recent years, manufacturers have overcome the defect of being in lack of color variation and have provided twin-color sleeves with color variation, the method of manufacturing they are taking in making such twin-color sleeves uses twice injections of plastics with different colors; however, the sleeves made from such methods are subjected to twisting and deformation by virtue that the plastic is under large pressure when in injection to render the dies which are left with fine and elongate holes unable to bear the pressure. Due to easiness of twisting and deforming of the holes prepared, the holes must have predetermined sizes in order to combine with the stems of tools; and by virtue that the patterns of the first time injection and the second time injection are hard to be aligned with each other; some people proposed to directly inject the sleeves onto the tailing ends of the stems of the tools to eliminate the defect of the tendency of deformation of the holes for the sleeves. However, such a measure for improvement will make lowering of the speed of the entire process of production for injection and shaping of plastic; and a plurality of machines are supposed to be added for increasing the yield of production, this makes high cost, and amount of plastic used is larger; besides, plastic is contractible and tends to influence the appearance of the products, the measure is still undesired.

In view of these, the motive of the present invention is to provide a method to solve the problem of the tendency of twisting and deformation of the holes prepared for the twin-color the handle grips of tools.

### SUMMARY OF THE INVENTION

The main object of the present invention is to provide a method of manufacturing a handle grip of a tool with low cost and fast speed.

The secondary object of the present invention is to surely provide a method of manufacturing a handle grip of a tool no matter how deep and how thin the holes for combining are.

Another object of the present invention is to provide a structure of a handle grip of a tool, which structure is firm in combining and accurate in alignment as well as having beautiful appearance.

To achieve the stated object, the method taken in the present invention includes the following steps:
1. to position the mandrel of a manufacturing machine and to inject plastic material to form an inner layer;
2. to release the aforesaid positioning to leave positioning holes on the shaped inner layer, the inner layer then being processed by second time injection to completely envelop the inner layer with plastic and shape a middle layer; and
3. the middle layer being processed by third time injection to partially envelop the middle layer with plastic to thereby form an external layer with the middle layer partially exposed, thereby, a twin-color handle grip of a tool in firm combining being completed. On the handle grip of the tool made by the above steps, the holes formed after taking off the mandrel of the manufacturing machine are holes for combining the stem of the tool. By the fact that the mandrel is positioned in manufacturing, the holes made are not subjected to twisting and deformation, and are convenient for combining with the stem of the tool.

The present invention will be apparent after reading the detailed description of the preferred embodiment thereof in reference to the accompanying drawings.

### BRIEF DESCRIPTION OF THE DRAWINGS

Fig. 1 is process flow chart of the present invention;

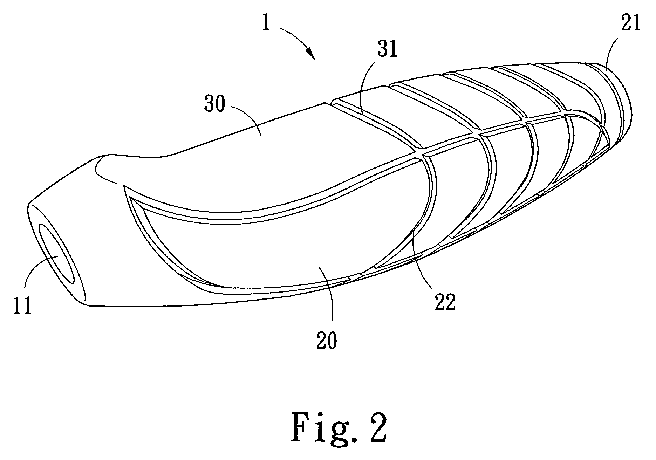

Fig. 2 is a perspective view of an embodiment of the present invention;
Fig. 3 is a sectional view showing the inner sleeve of the present invention;
Fig. 4 is a sectional view showing the middle sleeve of the present invention;
Fig. 5 is a sectional view showing the completed article of the present invention;
Fig. 6 is a sectional view showing use of the embodiment of the present invention;
Fig. 7 is a second process flow chart of the present invention;
Fig. 7a is a sectional view showing the middle sleeve made from the second process flow chart of the present invention.

### DETAILED DESCRIPTION OF THE PREFERRED EMBODIMENT

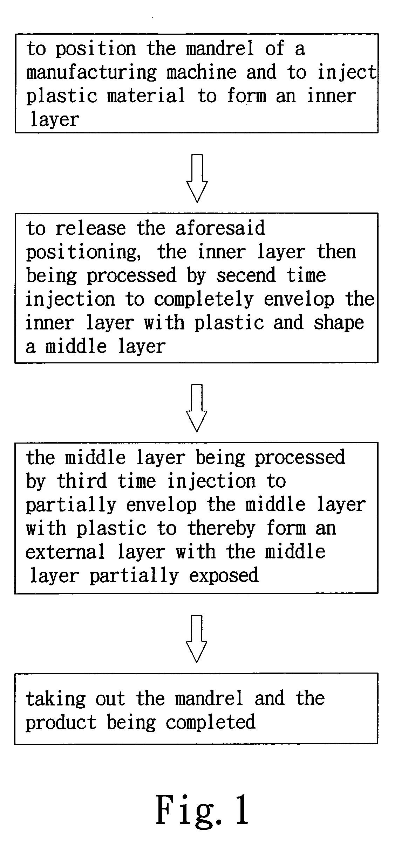

Referring to Fig. 1, the method of the present invention includes the following steps:
1. to position the mandrel of a manufacturing machine and to inject plastic material to form an inner layer;
2. to release the aforesaid positioning to leave positioning holes on the shaped inner layer, the inner layer then being processed by second time injection to completely envelop the inner layer with plastic and shape a middle layer; and
3. the middle layer being processed by third time injection to partially envelop the middle layer with plastic to thereby form an external layer with the middle layer partially exposed, thereby, a twin-color handle grip of a tool in firm combining being completed.

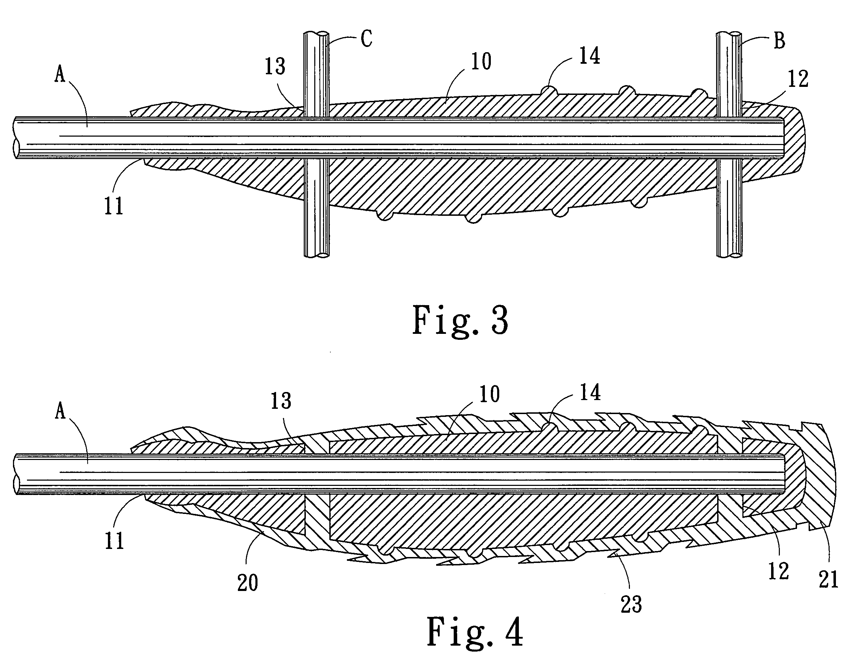

When in manufacturing, a mandrel "A" is positioned by positioning rods "B" and "C", an inner sleeve 10 is formed by injection from plastic material; referring to Fig. 3, when the positioning rods "B" and "C" are removed, the inner sleeve 10 is formed thereon positioning holes 12, 13 and is formed thereon a pattern (not shown) and a plurality of combining protrusions 14.

The inner sleeve 10 then is processed by the second time injection to envelop the inner sleeve 10 with plastic along the contour of the latter and shape a middle sleeve 20. The middle sleeve 20 is formed thereon a pattern 22, and is provided at suitable locations thereon with a plurality of protrusions 23, and further is provided on the tailing end thereof with a stepped round protruding portion 21 (as shown in Fig. 4). The middle sleeve 20 is firmly combined by the aids of the positioning holes 12, 13 on the inner sleeve 10 and the plural combining protrusions 14.

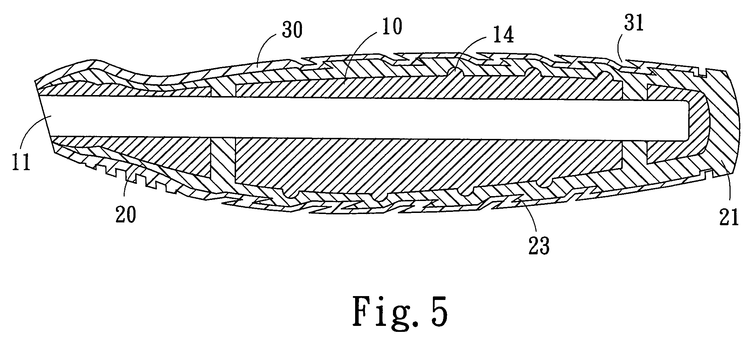

And the middle sleeve 20 then is processed by third time injection to envelop the middle sleeve 20 with plastic to thereby form an external sleeve 30 with the middle sleeve 20 partially and the round protruding portion 21 on the tailing end of the middle sleeve 20 exposed; and the external sleeve 30 enveloping the middle sleeve 20 is also provided with a pattern 31 along the pattern 22 of the middle sleeve 20, and the pattern 22 of the middle sleeve 20 can be tidily aligned with the pattern 31 of the external sleeve 30, combining of them is continuous (as shown in Fig. 5).

The inner sleeve 10 is not exposed; in this mode, the plastics for the second time injection, the third time injection and even fourth time injection can be recovered for reusing. This can largely reduce the cost of production. The middle sleeve 20 is formed by the first time injection to envelop the inner sleeve 10 with a thin layer; the amount of plastic used for this is small, thereby the cost of production can be lowered. Also by the fact that the amount of plastic used for the middle sleeve 20 is small, it has higher stability, and the quality of the product will not be influenced by contractibility of the material. And by virtue that the middle sleeve 20 is formed thereon a pattern 22, so that the external sleeve 30 being partially enveloped can be made to form its own pattern 31 along the pattern 22. In this way, combining of the pattern 22 and the pattern 31 can be continuous.

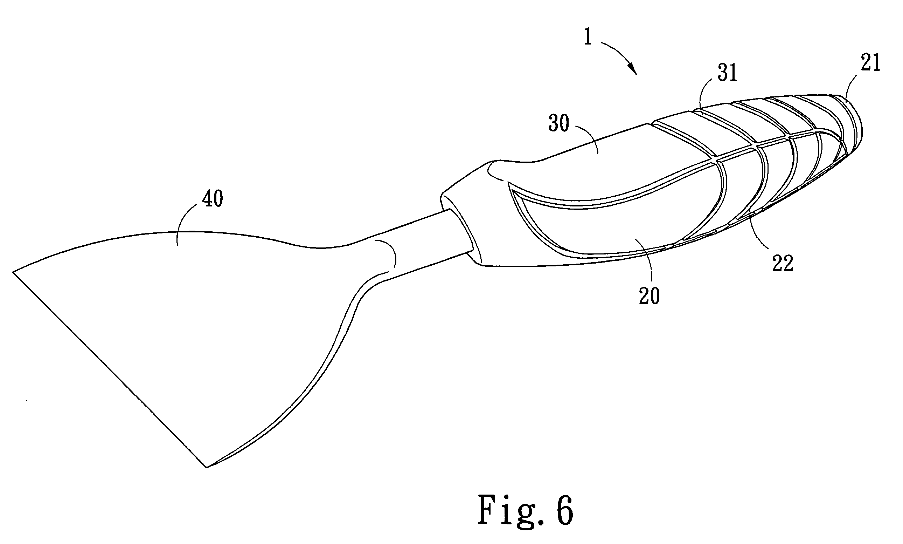

Referring to Fig. 6, the middle sleeve 20 and the external sleeve 30 use plastics with different colors, and they can be manufactured with accurate alignment to product a twin-color handle grip of a tool. The external sleeve 30 can also use synthetic rubber (TPR) as its material in order to have both esthetic beauty and coziness in use.

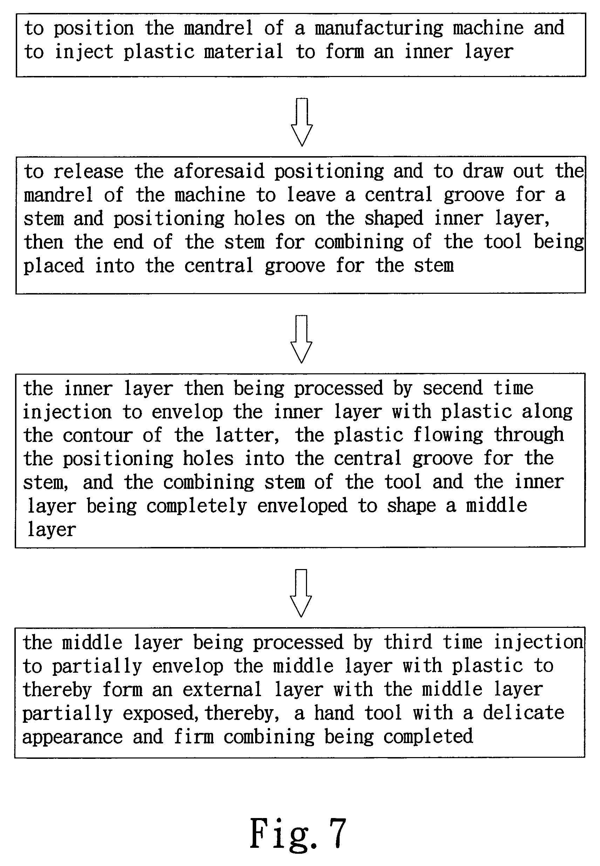

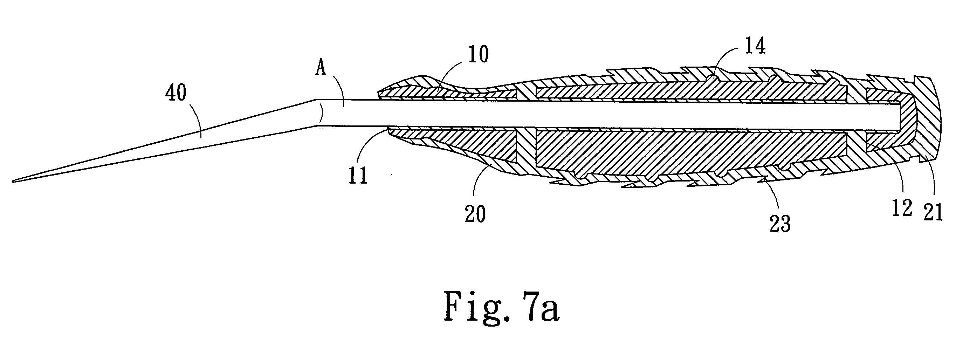

And referring to Fig. 7, a second process flow of the present invention can directly manufacture a handle grip on a tool 40 and includes the following steps:
1. to position the mandrel of a manufacturing machine and to inject plastic material to form an inner layer;
2. to release the aforesaid positioning and to draw out the mandrel of the machine to leave a central groove for a stem and positioning holes on the shaped inner layer, then the end of the stem for combining of the tool being placed into the central groove for the stem of the inner layer;
3. the inner layer then being processed by second time injection to envelop the inner layer with plastic along the contour of the latter, the plastic flowing through the positioning holes into the central groove for the stem, and the combining stem of the tool and the inner layer being completely enveloped to shape a middle layer (referring to Fig. 7a); and
4. the middle layer being processed by third time injection to partially envelop the middle layer with plastic to thereby form an external layer with the middle layer partially exposed, thereby, a hand tool with a delicate appearance and firm combining being completed.

Accordingly, the method of manufacturing of and the structure made by the present invention has the following advantages:
1. By using three times for plastic injection, patterns on different layers can be easily aligned with each other, combining of the patterns can be continuous, thereby, the handle grip of a tool made can have a beautiful appearance.
2. The three times for plastic injection use the recovered non-primary plastic for the purpose that the inner sleeve is not exposed, and the amount of the primary plastic used for the middle layer is very small, this not only does not increase but also can largely reduce the cost of production.
3. When the handle grip of a tool is individually manufactured, by virtue that the mandrel is positioned by positioning rods, thereby, the holes for the stem can surely be manufactured no matter how deep and how thin the holes for the stem are. And the holes for the stem will not twist or deform, and are convenient for combining with the tool.
4. The handle grip can also be directly manufactured on the stem of the tool, by the second time plastic injection to envelop the inner layer with plastic along the contour of the latter, the plastic flows through the positioning holes into the central groove for the stem to directly combine with the stem of the tool, thereby the strength of combining can be larger.

In conclusion, the present invention discloses a method of manufacturing a handle grip of a tool and its products; it eliminates the defects of uneasiness of manufacturing resided in the conventional twin-color handle grips of tools, and provides the method of manufacturing a handle grip of a tool and its products for which the method of manufacturing is convenient and the cost of production can be lowered.

The above stated are only for illustrating the preferred embodiments and not for giving any limitation to the scope of the present invention. It will be apparent to those skilled in this art that various modifications or changes made without departing from the spirit of this invention shall fall within the scope of the appended claims.

## Claims

1. A method of manufacturing a handle grip of a tool, said method comprises the following steps:
1) to position a mandrel of a manufacturing machine and to inject plastic material to form an inner layer;
2) to release said positioning to leave positioning holes on said inner layer having been shaped, said inner layer then is processed by second time injection to completely envelop said inner layer with plastic and shape a middle layer; and
3) said middle layer being processed by third time injection to partially envelop said middle layer with plastic to thereby form an external layer with said middle layer partially exposed, and said handle grip of said tool with two colors in firm combining state being completed.

2. A method of manufacturing a handle grip of a tool, said method comprises the following steps:
1) to position a mandrel of a manufacturing machine at least with a positioning rod and to inject plastic material to form an inner layer;
2) to release said positioning and to draw out said mandrel of said machine to leave a central groove for a stem and positioning holes on said inner layer having been shaped, then the end of said stem for combining of said tool being placed into said central groove for said stem;
3) said inner layer then being processed by second time injection to envelop said inner layer with plastic along the contour of said inner layer, said plastic flowing through said positioning holes into said central groove for said stem, and said combining stem of said tool and said inner layer being completely enveloped to shape a middle layer; and
4) said middle layer being processed by third time injection to partially envelop said middle layer with plastic to thereby form an external layer with said middle layer partially exposed, thereby, said tool with a delicate appearance and firm combining being completed.

3. A handle grip of a tool comprising:
an inner sleeve formed thereon a central groove for a stem and at least a positioning hole, and is formed thereon an embryo of a pattern and a plurality of combining protrusions;
a middle sleeve in the shape same as that of said inner sleeve, said middle sleeve is provided on the tailing end thereof with a round protruding portion extending rearwardly, said middle sleeve is firmly combined with said inner sleeve by the aids of said positioning holes on said inner sleeve, and said middle sleeve is formed thereon a desired pattern and a plurality of protrusions;
an external sleeve partially enveloping said middle sleeve, said external sleeve is combined with said middle sleeve by the aid of said protrusions provided on said middle sleeve to increase the strength of combining; said external sleeve is also provided with a pattern in the shape same as said pattern of said middle sleeve, and said patterns are accurately aligned with each other, and combining of said handle grip of said tool thus is firm.

4. The method of manufacturing a handle grip of a tool as claimed in claim 1, wherein
said inner sleeve is manufactured with the plastics recovered for reusing in said second time injection, said third time injection and even fourth time injection.

5. The method of manufacturing a handle grip of a tool as claimed in claim 2, wherein
said inner sleeve is manufactured with the plastics recovered for reusing in said second time injection, said third time injection and even fourth time injection.

6. The method of manufacturing a handle grip of a tool as claimed in claim 1, wherein
said middle layer and said external layer use plastics of different colors.

7. The method of manufacturing a handle grip of a tool as claimed in claim 2, wherein
said middle layer and said external layer use plastics of different colors.

8. The method of manufacturing a handle grip of a tool as claimed in claim 1, wherein
said external sleeve uses synthetic rubber (TPR) with better feeling in touching as its material.

9. The method of manufacturing a handle grip of a tool as claimed in claim 2, wherein
said external sleeve uses synthetic rubber (TPR) with better feeling in touching as its material.

10. The method of manufacturing a handle grip of a tool as claimed in claim 1, wherein
said external sleeve formed by said third time injection is left with a vacant portion, said vacant portion is filled up with plastic in fourth time injection to form said handle grip of said tool with plural colors.

11. The method of manufacturing a handle grip of a tool as claimed in claim 2, wherein
said external sleeve formed by said third time injection is left with a vacant portion, said vacant portion is filled up with plastic in fourth time injection to form said handle grip of said tool with plural colors.
